# EUROPEAN PATENT APPLICATION

(11) **EP 4 280 712 A1**
(43) Date of publication of application: **22.11.2023**
(21) Application number: 21919083.2
(22) Date of filing: 14.12.2021
(51) Int. Cl.: H04W 56/00

(54) **METHOD FOR DETERMINING SYNCHRONIZATION SIGNAL BLOCK PARAMETER AND RELATED APPARATUS**

(30) Priority: 15.01.2021 CN 202110057954
(71) Applicant: Spreadtrum Communications (Shanghai) Co., Ltd., Shanghai 201203 (CN)
(72) Inventor: ZHOU, Huayu, Shanghai 201203 (CN); SHEN, Xingya, Shanghai 201203 (CN); HE, Yang, Shanghai 201203 (CN); PAN, Zhengang, Shanghai 201203 (CN)
(74) Representative: Mewburn Ellis LLP
(86) International application number: PCT/CN2021/137988
(87) International publication number: WO 2022/151894

(57) **Abstract**

Disclosed herein are implementations of a method for determining a synchronous signal block (SSB) parameter and related apparatus. The method includes that a terminal obtains a value of a quasi co-location (QCL) parameter of the SSB based on a master information block (MIB) and/or a system information block type-1 (SIB1). In implementations of the present disclosure, when the SSB with a subcarrier spacing of 480 kHz or 960 kHz is defined, the problem in which the number of QCL relationships and a discovery burst transmission window of the SSB with the subcarrier spacing of 480 kHz or 960 kHz is unable to be determined can be solved.

## Description

### TECHNICAL FIELD

This disclosure relates to the field of wireless communications, and in particular to a method for determining a synchronization signal block (SSB) parameter and related apparatus.

### BACKGROUND

Currently, in a frequency range 2 (FR2) of a high frequency band in a licensed spectrum, a synchronous signal block (SSB) with a subcarrier spacing of 480kHz or 960kHz is not defined. After the SSB with the subcarrier spacing of 480kHz or 960kHz is defined, how to determine the number of quasi co-location (QCL) relationships and a discovery burst transmission window of the SSB with the subcarrier spacing of 480kHz or 960kHz are problems to be solved.

### SUMMARY

Disclosed herein are implementations of a method for determining a synchronous signal block (SSB) parameter and related apparatus, so as to solve the problem in which the number of quasi co-location (QCL) relationships and a discovery burst transmission window of the SSB with a subcarrier spacing of 480 kHz or 960 kHz is unable to be determined, when the SSB with the subcarrier spacing of 480kHz or 960kHz is defined.

In a first aspect, a method for determining a QCL parameter of the SSB is provided in implementations of the present disclosure. The method includes that a terminal obtains a value of the QCL parameter of the SSB based on a master information block (MIB) and/or a system information block type-1 (SIB1).

It can be seen that in implementations of the present disclosure, since the SSB may have the subcarrier spacing of 480 kHz or 960 kHz, the terminal can determine the value of the QCL parameter of the corresponding SSB based on the MIB and/or the SIB1. The value of the QCL parameter is used to help determine a candidate position of the SSB, which is conducive for the terminal to complete a beam sweeping process accurately and efficiently.

In a second aspect, a method for determining a length of a discovery burst transmission window of the SSB is provided in implementations of the present disclosure. The method includes that a terminal obtains the length of the discovery burst transmission window of the SSB based on a SIB1.

It can be seen that in implementations of the present disclosure, since the SSB may have the subcarrier spacing of 480 kHz or 960 kHz, the terminal can determine the length of the discovery burst transmission window based on the SIB1. The length of the discovery burst transmission window is used to help determine a transmission window of the SSB, which is conducive for the terminal to complete a beam sweeping process accurately and efficiently.

In a third aspect, an apparatus for determining a QCL parameter of an SSB is provided in implementations of the present disclosure. The apparatus includes an obtaining unit configured to obtain a value of the QCL parameter of the SSB based on an MIB and/or an SIB1.

In a fourth aspect, an apparatus for determining a length of a discovery burst transmission window of an SSB is provided in implementations of the present disclosure. The apparatus includes an obtaining unit configured to obtain the length of the discovery burst transmission window of the SSB based on an SIB1.

In a fifth aspect, a terminal is provided in implementations of the present disclosure. The terminal includes a processor, a memory, and one or more programs. These one or more programs are stored in the memory and configured to be executed by the processor, where the one or more programs include instructions for executing operations of the method described in the first aspect or the second aspect of implementations of the present disclosure.

In a sixth aspect, a computer-readable storage medium is provided in implementations of the present disclosure. The computer-readable storage medium is configured to store a computer program for electronic data interchange (EDI), where the computer program enables the computer to implement operations of the method described in the first aspect or the second aspect of implementations of the present disclosure.

In a seventh aspect, a chip is provided in implementations of the present disclosure. The chip is configured to obtain an MIB and/or an SIB1, and to obtain a value of a QCL parameter of an SSB based on the MIB and/or the SIB1.

In an eighth aspect, a chip module is provided in implementations of the present disclosure. The chip module includes a transceiver component and a chip. The chip is configured to receive an MIB and/or an SIB1 through the transceiver component and to obtain a value of a QCL parameter of an SSB based on the MIB and/or the SIB1.

In a ninth aspect, a chip is provided in implementations of the present disclosure. The chip is configured to obtain an SIB1, and to obtain a length of a discovery burst transmission window of an SSB based on the SIB1.

In a tenth aspect, a chip module is provided in implementations of the present disclosure. The chip module includes a transceiver component and a chip. The chip is configured to receive an SIB1 through the transceiver component, and to obtain a length of a discovery burst transmission window of an SSB based on the SIB1.

### BRIEF DESCRIPTION OF THE DRAWINGS

In order to describe technical solutions in implementations of the disclosure or the related art more clearly, the following will give a brief introduction to accompanying drawings required for describing implementations or the related art. Apparently, accompanying drawings hereinafter described are merely some implementations of the disclosure. Based on these drawings, those of ordinary skill in the art can also obtain other drawings without creative effort.
FIG. 1A is an architecture diagram of a mobile communication system 100 provided in implementations of the disclosure.
FIG. 1B is a schematic diagram of a distribution of synchronous signal block (SSB) candidate positions provided in implementations of the disclosure.
FIG. 1C is a schematic structural diagram of a terminal 120 provided in implementations of the disclosure.
FIG. 2 is a schematic flow chart of a method for determining a quasi co-location (QCL) parameter of an SSB provided in implementations of the disclosure.
FIG. 3 is a schematic flow chart of a method for determining a length of a discovery burst transmission window of an SSB provided in implementations of the disclosure.
FIG. 4 is a schematic block diagram illustrating functional units of an apparatus 4 for determining a QCL parameter of an SSB provided in implementations of the disclosure.
FIG. 5 is a schematic block diagram illustrating functional units of an apparatus 5 for determining a QCL parameter of an SSB provided in other implementations of the disclosure.
FIG. 6 is a schematic block diagram illustrating functional units of an apparatus 6 for determining a length of a discovery burst transmission window of an SSB provided in implementations of the disclosure.
FIG. 7 is a schematic block diagram illustrating functional units of an apparatus 6 for determining a length of a discovery burst transmission window of an SSB provided in other implementations of the disclosure.

### DETAILED DESCRIPTION

In order to provide personnel skilled in the art with a better understanding of the solutions of the present disclosure, the following will clearly and completely illustrate technical solutions of implementations of the disclosure in combination with accompanying drawings of implementations of the disclosure. Apparently, implementations described herein are merely some implementations, rather than all implementations, of the disclosure. Based on implementations of the disclosure, all other implementations obtained by those of ordinary skill in the art without creative effort shall fall within the protection scope of the disclosure.

The terms "first", "second", or the like used in the specification, the claims, and accompanying drawings of the disclosure are used to distinguish different objects rather than describe a particular order. In addition, the terms "include", "comprise", and "have" as well as variations thereof are intended to cover a non-exclusive inclusion. For example, a process, method, system, product, or apparatus including a series of steps or units is not limited to the listed steps or units, but optionally further includes steps or units not listed, or optionally further includes other steps or units inherent to those processes, methods, products or apparatus.

Reference herein to "implementation" means that a particular feature, structure, or characteristic described in connection with an implementation may be included in at least one implementation of the present disclosure. An appearance of this term in various places in the specification is not necessarily referred to the same implementation, nor is a separate or alternative implementation mutually exclusive of other implementations. It is understood explicitly and implicitly by those skilled in the art that implementations described herein can be combined with other implementations.

A method for determining a synchronization signal block (SSB) parameter and related apparatus is provided in implementations of the present disclosure. The following will describe in detail implementations in combination with accompanying drawings.

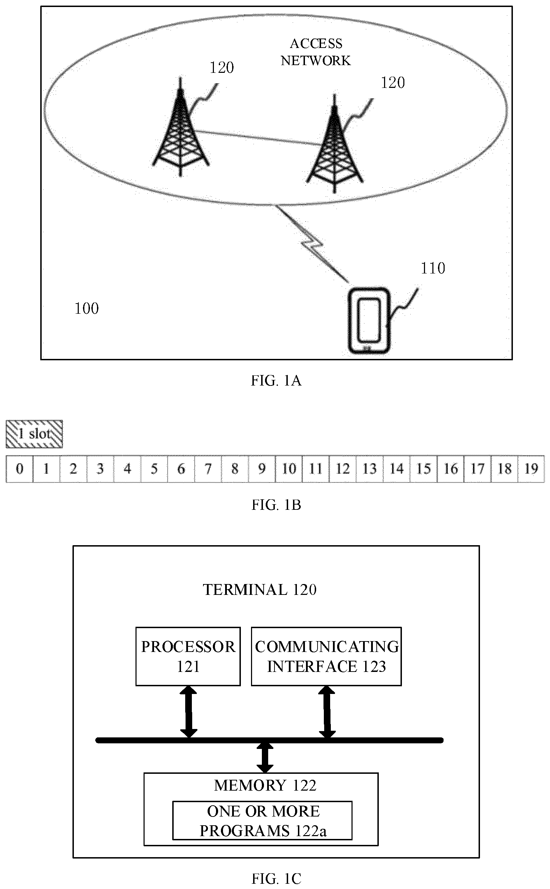

Referring to FIG. 1A, FIG. 1A is an architecture diagram of a mobile communication system 100 provided in implementations of the disclosure. The mobile communication system 100 includes a network equipment 110 on an access network side and a terminal 120 on a user side, where the network equipment 110 is in communication connection with the terminal 120.

The network equipment 110 is deployed in a radio access network (RAN) to provide the terminal 120 with a radio access function. The network equipment may be a base station (BS). The network equipment 110 may wirelessly communicate with terminal 120 via one or more antennas. The network equipment 110 may provide communication coverage for a geographical area in which it is located. The base station may include a macro base station, a micro base station, a relay station, an access point (AP), or the like. In some implementations, the base station may be referred to by the person skilled in the art as a base transceiver station (BTS), a radio base station, an access point, a radio transceiver, a basic service set (BSS), an extended service set (ESS), a node B, an evolved node B (eNB or eNodeB), or other proper terms. Exemplarily, in a 5G system, a base station is referred to as a gNB. For the convenience of description, in implementations of the present disclosure, the foregoing apparatus for providing a wireless communication function for the terminal 120 is generally referred to as a network equipment.

Terminals 120 may be dispersed throughout the mobile communication system, and each terminal 120 may be stationary or mobile. The terminal 120 may also be referred to by those skilled in the art as a mobile station, a subscriber station, a mobile unit, a subscriber unit, a wireless unit, a remote unit, a mobile device, a user equipment, a wireless device, a wireless communications device, a remote device, a mobile subscriber station, an access terminal, a mobile terminal, a wireless terminal, a remote terminal, a handheld device, a user agent, a mobile client, a client, or other proper terms. The terminal 120 may be a cellular radio telephone, a personal digital assistant (PDA), a wireless modem, a wireless communication device, a handheld device, a tablet computer, a laptop computer, a cordless telephone, a Wireless Local Loop (WLL) station, or the like. The terminal 120 can communicate with the network equipment 110 in a mobile communication system.

The network equipment 110 and the terminal 120 may communicate with each other via air interface technology, for example, via cellular technology. A communication link between the network equipment 110 and the terminal 120 may include a downlink (DL) transmission from the network equipment 110 to the terminal 120, and/or an uplink (UP) transmission from the terminal 120 to the network equipment 110. The DL transmission may also be referred to as a forward link transmission. The UP transmission may also be referred to as a reverse link transmission. In some examples, the DL transmission may include a transmission of a discovery signal, which may include a reference signal and/or a synchronization signal.

As illustrated in a schematic structural diagram of terminal 120 in FIG. 1C, the terminal 120 provided in implementations of the present disclosure includes a processor 121, a memory 122, a communication interface 123, and one or more programs 122a, where the one or more programs 122a are stored in the memory 122 and configured to be executed by the processor 121. These one or more programs 122a include instructions for executing method described in method implementations of the present disclosure.

The mobile communication system illustrated in FIG. 1A may be a long term evolution (LTE) system, a next-generation evolution system based on the LTE system, such as an LTE-advanced (LTE-A) system or a 5th Generation (5G) system (also referred to as a new radio (NR) system), a next-generation evolution system based on a 5G system, or the like. In implementations of the present disclosure, the terms "system" and "network" are often used interchangeably, but their meanings can be understood by those skilled in the art.

The communication system and service scenarios described in implementations are intended to illustrate technical solutions of implementations more clearly and do not constitute a limitation to technical solutions of implementations. It is understood by those of ordinary skill in the art that technical solutions of implementations are equally applicable to similar technical problems as the communication system evolves and new service scenarios emerge.

In conventional LTE systems, data is transmitted between the network equipment 110 and the terminal 120 over a licensed spectrum. As a traffic volume increases, especially in some urban areas, the licensed spectrum may be difficult to meet the demands of the traffic volume. By introducing licensed-assisted access (LAA) technology, data can be transmitted between the network equipment 110 and the terminal 120 over an unlicensed spectrum, thereby meeting a larger traffic-volume demand.

The unlicensed spectrum is determined by nations and regions and is available for communication of a radio device. Generally, the unlicensed spectrum is regarded as a shared spectrum, i.e., communication devices in different communication systems can use the unlicensed spectrum without having to apply an exclusive spectrum license from the government as long as these communication devices satisfy regulatory requirements on the unlicensed spectrum set by the nations or regions. The unlicensed spectrum may also be referred to by those skilled in the art as non-licensed spectrum, shared spectrum, non-licensed frequency band, unlicensed band, shared frequency band, license-exempt spectrum, license-exempt frequency band, or other proper terms.

A third generation partnership project (3GPP) is discussing the use of NR unlicensed technology for communications over the unlicensed spectrum by using NR technology. For the NR unlicensed technology, the SSB also needs to be sent. In a non-standalone (NSA) mode, the SSB can be used for synchronization and measurement of the terminal 120. In a standalone (SA) mode, the SSB can also be used for initial access of the terminal 120.

In the time domain, one SSB occupies four symbols (namely, orthogonal frequency division multiplexing (OFDM) symbols), including one symbol of a primary synchronization signal (PSS), one symbol of a secondary synchronization signal (SSS), and two symbols of a physical broadcast channel (PBCH). In the SSB, symbols are numbered in ascending order from 0 to 3. In the frequency domain, one SSB occupies 24 consecutive resource blocks (RBs). Each RB includes 12 subcarriers. The subcarriers in the 24 RBs are numbered in ascending order from 0 to 287, starting from an RB with the lowest number. For the PSS and SSS, resources are mapped to the 127th subcarrier in the middle. For the PBCH, resources are mapped to the 288th subcarriers. The PSS, SSS, and PBCH have the same cyclic prefix (CP) length and subcarrier spacing. The subcarrier spacing can be configured as 15 kHz, 30 kHz, 120 kHz, or 240 kHz.

The network equipment may transmit signals by an omni-directional beam or by multiple directional beams. In other words, the number of beams used by the network equipment may be one or more. In a current new radio unlicensed (NRU for short, which can be used without having to applying a license from a competent authority under regulatory conditions, such as 5G NR-U, where 5G NR-U is 5G NR working in an unlicensed frequency band) frequency band, the network equipment can use up to 8 directional beams and generally uses an even number of directional beams. Therefore, the number of beams used by the network equipment may generally be 1, 2, 4, or 8. When the number of beams is 1, the network equipment uses the omni-directional beam, covering a range of 360° , or covering a range less than 360° determined according to an actual environment. When the number of beams is multiple, the network equipment uses directional beams, and all beams cover a range of 360° together, and each beam covers a range of 360/n, where n is the number of beams. For example, when the number of beams is 4, each beam covers 90 °.

Since the band used by NRU is relatively high, signals are mostly sent by the directional beam. When the network equipment uses the directional beam to send signals, in order to cover all cells configured with the network equipment, the network equipment needs to sequentially use multiple beams in different directions to send the same information, which can be referred to as beam sweeping.

To support beam sweeping, the SSB is organized into a series of bursts which are sent cyclically. For beam sweeping, in each SSB periodicity, the network equipment uses each beam to send the SSB in turn, multiple SSBs sent in each SSB periodicity forms a burst, and the multiple SSBs can be numbered in ascending order starting from 0. The number of the SSBs in one burst may be the same as the number of beams used by the network equipment, and the SSBs in one burst are sent by different beams respectively.

Each SSB periodicity has multiple SSB candidate positions. The SSB candidate positions are time-domain positions where the network equipment may send the SSB. These SSB candidate positions can be numbered in an ascending order starting from 0. FIG. 1B exemplarily shows a schematic diagram of the distribution of the SSB candidate positions. As illustrated in FIG. 1B, taking the subcarrier spacing of 30 kHz as an example, there are 20 SSB candidate positions within a half frame (5ms). Specifically, 1ms has 2 slots, each slot has 2 SSB candidate positions, so 5ms has 20 SSB candidate positions. The 20 SSB candidate positions are numbered in ascending order starting from 0, and these 20 candidate positions have an index from 0 to 19 respectively.

All the SSB candidate positions in one SSB periodicity correspond to the beams used by the base station in sequence. For example, if the network equipment uses 2 beams and the number of SSB candidate positions is 20, then the first SSB candidate position corresponds to the first beam, the second SSB candidate position corresponds to the second beam, the third SSB candidate position corresponds to the first beam, the fourth SSB candidate position corresponds to the second beam, and so on. In this case, the SSB candidate position corresponds to the beam, which means that the beam can send the SSB at the corresponding SSB candidate position, and other beams other than this beam are unable to send the SSB at this SSB candidate position.

Since the number of the SSB candidate positions is generally greater than the number of the beams used by the network equipment, each beam may send the SSB at one of the corresponding multiple SSB candidate positions within one SSB periodicity. In this case, the multiple SSB candidate positions corresponding to the same beam constitutes an SSB candidate position set of the beam. An index of an SSB candidate position in the SSB candidate position set is equal to a result obtained by performing a certain operation on a beam-related parameter, so that the terminal can obtain multiple SSB candidate position sets according to indexes of the SSB candidate positions and values of beam-related parameters. Exemplarily, a modulo operation can be performed on the index of the SSB candidate position and a value of a quasi co-location (QCL) parameter. The modulo operation refers to the index of the SSB candidate position divided by the value of the QCL parameter, and a remainder obtained is a result of the modulo operation.

Normalization of an unlicensed spectrum in a low frequency band has been partially completed, and normalization of an unlicensed spectrum in a high frequency band is in progress. At present, a subcarrier spacing of an SSB may be 120 kHz and 240 kHz in a frequency range 2 (FR2) of the high frequency band in the unlicensed spectrum. A subcarrier spacing used by a control channel and a data channel may be 120 kHz, 480 kHz, or 960 kHz in the unlicensed spectrum of the high frequency band (for example, 52.6 GHz ~71 GHz). An initial active bandwidth part (BWP) is known as a BWP 0 or a BWP indexed with 0 and is used for initial cell search or selection. Similar to the licensed spectrum of the high frequency band, the initial active BWP may use the subcarrier spacing of 120 kHz. Other BWPs that are not indexed 0 or reconfigured to be indexed 0, may use the subcarrier spacing of 480 kHz and 960 kHz. When the terminal operates in other BWPs or is activated/switched to other BWPs, the best detected/measured SSB also has the same subcarrier spacing as the control channel and the data channel so that the receiver does not need to process two different kinds of subcarrier spacing at the same time. Therefore, it is preferable that the SSB with the subcarrier spacing of 480 kHz or 960 kHz is also configured in the other BWPs. Such SSBs are mainly used for measurement (including CGI reporting).

Currently, the SSB with the subcarrier spacing of 480kHz or 960kHz is not defined in the FR2 of high frequency band in the licensed spectrum. After the SSB with the subcarrier spacing of 480kHz or 960kHz is defined, how to determine the number of the QCL relationships and the discovery burst transmission window of the SSB with the subcarrier spacing of 480kHz or 960kHz are problems to be solved.

Given the above problems, implementations of the present disclosure provide a method for determining an SSB parameter, which will be described in detail below.

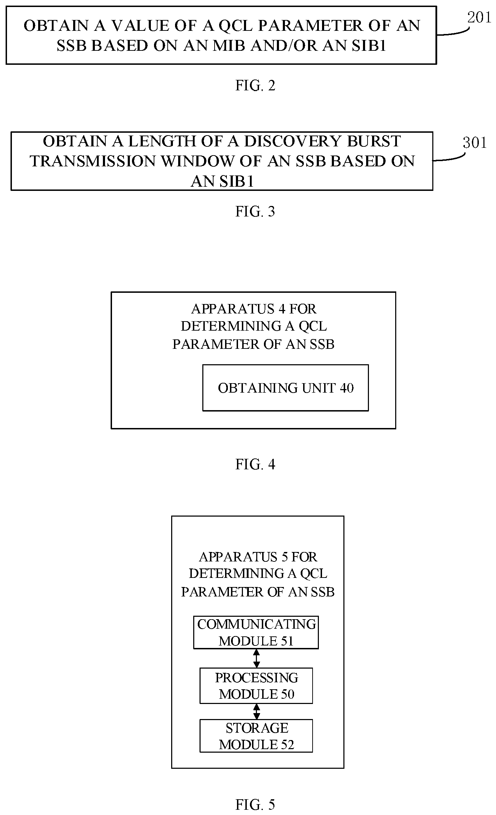

Refer to FIG. 2, FIG. 2 is a schematic flow chart of a method for determining a QCL parameter of an SSB provided in implementations of the disclosure. The method is applicable to the terminal 120 illustrated in FIG. 1A and includes the following.

At S201, the terminal obtains a value of the QCL parameter of the SSB based on a master information block (MIB) and/or a system information block type-1 (SIB1).

The QCL parameter of the SSB may also be referred to as the number of QCL relationships of the SSB. Generally, a cell in the protocol is ssb-PositionQCL-r16.

In implementations of the present disclosure, the value of the QCL parameter can correspond to the number of beams that the network equipment may use. For example, the value of the QCL parameter can be equal to the number of beams. In other words, the value of the QCL parameter indicates the number of beams or is associated with the number of beams. The QCL relationship means having the same large-scale characteristics which include, but is not limited to, delay spread, Doppler spread, Doppler shift, average channel gain, average delay, or the like. Since signals transmitted by the same beam have a QCL relationship, SSB candidate positions are divided according to the value of the QCL parameter in implementations of the present disclosure.

Exemplarily, if a network equipment uses 4 beams, the value of the corresponding QCL parameter is also 4. These four beams are beams 1 to 4 respectively, and the beams 1 to 4 are sequentially adjacent in a clockwise direction or a counterclockwise direction. The number of SSB candidate positions is 20. These 20 SSB candidate positions are numbered in ascending order starting from 0, and these 20 candidate positions have an index from 0 to 19 respectively.

In SSB candidate positions 0 to 19, SSB candidate positions, whose indexes are modulo with 4 (the value of QCL parameter) to obtain a remainder of 0, are taken as SSB candidate positions in a first SSB candidate position set corresponding to beam 1, which are SSB candidate position 0, SSB candidate position 4, SSB candidate position 8, SSB candidate position 12, and SSB candidate position 16.

In SSB candidate positions 0 to 19, SSB candidate positions, whose indexes are modulo with 4 (the value of QCL parameter) to obtain a remainder of 1, are taken as SSB candidate positions in a second SSB candidate position set corresponding to beam 2, which are SSB candidate position 1, SSB candidate position 5, SSB candidate position 9, SSB candidate position 13, and SSB candidate position 17.

In SSB candidate positions 0 to 19, SSB candidate positions, whose indexes are modulo with 4 (the value of QCL parameter) to obtain a remainder of 2, are taken as SSB candidate positions in a third SSB candidate position set corresponding to beam 3, which are SSB candidate position 2, SSB candidate position 6, SSB candidate position 10, SSB candidate position 14, and SSB candidate position 18.

In SSB candidate positions 0 to 19, SSB candidate positions, whose indexes are modulo with 4 (the value of QCL parameter) to obtain a remainder of 3, are taken as the SSB candidate position in a third SSB candidate position set corresponding to beam 4, which are SSB candidate position 3, SSB candidate position 7, SSB candidate position 11, SSB candidate position 15, and SSB candidate position 19.

Before performing signal transmission in the unlicensed spectrum, a device needs to follow a listen-before-talk (LBT) principle under which the device needs to listen to a channel first, for example, making a clear channel assessment (CCA), to determine whether the channel of the unlicensed spectrum is occupied. If the channel of the unlicensed spectrum is unoccupied, the signal can be sent through the channel of the unlicensed spectrum. Therefore, the network equipment also needs to listen to the channel before sending the SSB. If the channel is unoccupied, the SSB can be sent at the current SSB candidate position. If the channel is occupied, the SSB needs to be sent at other SSB candidate positions reselected according to a certain rule. Therefore, a sending position of a burst is not fixed in each SSB periodicity.

In an initial access process, after receiving the SSB, the terminal obtains a physical downlink control channel (PDCCH) associated with a remaining minimum system information (RMSI) based on the SSB, then obtains a physical downlink shared channel (PDSCH) corresponding to the PDCCH, and parses RMSI from a PDSCH data. Since the RMSI is relatively large and may not be parsed successfully at once. In this case, the SSB needs to be detected again in the next periodicity to obtain the RMSI according to the detected SSB until the RMSI is parsed successfully. The detection herein includes but is not limited to, receiving the SSB and/or determining an SSB receiving position (namely the SSB candidate position at which the SSB is transmitted) through energy detection.

In a possible implementation, the value of the QCL parameter of the SSB is up to 16.

In this possible implementation, the value of the QCL parameter belongs to a first set, and the first set is {16, 8, 4, 2}.

In this possible implementation, the SSB has a subcarrier spacing of 120 kHz or 240 kHz.

In this possible implementation, the terminal obtains the value of the QCL parameter of the SSB based on the MIB and/or the SIB1, including that the terminal obtains the value of the QCL parameter of the SSB based on the MIB.

In a specific implementation, when the terminal performs an initial cell search or selection, the terminal searches for the SSB with the subcarrier spacing of 120 kHz or 240 kHz. After the SSB with the subcarrier spacing of 120 kHz or 240 kHz is searched out, the MIB may be obtained.

In this possible implementation, the MIB includes a QCL parameter indication information of the SSB. The QCL parameter indication information of the SSB indicates the QCL parameter of the SSB with the subcarrier spacing of 120 kHz or 240 kHz, and the QCL indication information has 2 bits.

In the unlicensed spectrum of the low frequency band, there generally are two bits in the MIB to indicate the value of the QCL parameter of the SSB. These two bits represent four values which are 8, 4, 2, and 1. In the unlicensed spectrum of the high frequency band, the MIB may maintain 2 bits (a QCL indication field) to indicate the value of the QCL parameter of the SSB with the subcarrier spacing of 120 kHz or 240 kHz. When the 2 bits in the MIB indicate the value of the QCL parameter of the SSB with the subcarrier spacing of 120 kHz or 240 kHz, the value of the QCL parameter of the SSB is up to 16. Correspondingly, the four values may be 16, 8, 4, and 2.

It can be seen that, in the present implementation, the value of the QCL parameter of the SSB can be determined by the MIB with regard to the SSB with the subcarrier spacing of 120 kHz or 240 kHz in the initial cell search or selection. The value of the QCL parameter is used to help determine the SSB candidate position, which is conducive for the terminal to complete a beam sweeping process accurately and efficiently.

In a possible implementation, the value of the QCL parameter of the SSB is up to 64.

In this possible implementation, the value of the QCL parameter belongs to a second set, and the second set is {64, 32, 16, 8, 4, 2, 1}, or a subset of {64, 32, 16, 8, 4, 2, 1}.

In this possible implementation, the SSB has a subcarrier spacing of 480 kHz or 960 kHz.

In this possible implementation, the terminal obtains the value of the QCL parameter of the SSB based on the MIB and/or the SIB1, including that the terminal obtains the value of the QCL parameter of the SSB based on the SIB1.

Because SIBI indicates the value of the QCL parameter of the SSB, there is no 2-bit limitation on the number of the QCL relationships of the SSB with the subcarrier spacing of 480 kHz/960 kHz.

In a specific implementation, after finishing the initial cell search or selection, the terminal obtains a configuration of the initial active BWP by the MIB and then obtains the SIB1 in the initial active BWP.

In general, the initial active BWP uses the subcarrier spacing of 120 kHz or 240 kHz. With the SIB1, the configuration of the other BWPs is obtained and the other BWPs are switched to.

In general, other BWPs use the SSB with the subcarrier spacing of 480 kHz or 960 kHz. When other BWPs have the SSB with the subcarrier spacing of 480 kHz or 960 kHz, the terminal may measure the SSB of 480 kHz or 960 kHz while receiving the control channel or the data channel, which can simplify implementation of the terminal because the terminal may not need two receiving modules for these two types of subcarrier spacing.

In this possible implementation, the SIB1 includes the QCL parameter indication information of the SSB. The QCL parameter indication information of the SSB indicates the QCL parameter of the SSB with the subcarrier spacing of 480 kHz or 960 kHz, and the QCL indication information has 2 bits or more than 2 bits.

It can be seen that, in the present implementation, the value of the QCL parameter of the SSB can be determined by the SIB1 with regard to the SSB with the subcarrier spacing of 480 kHz or 960 kHz after the initial cell search or selection. The value of the QCL parameter is configured to help determine the SSB candidate position, which is conducive for the terminal to complete a beam sweeping process accurately and efficiently.

For example, when there are both the SSB with the subcarrier spacing of 120 kHz or 240 kHz and the SSB with the subcarrier spacing of 480 kHz or 960 kHz, these two types of SSBs may be used for different purposes. The SSB with the subcarrier spacing of 120 kHz or 240 kHz is used for detection of wide beams to simplify the initial cell search or selection, for example, 16 wide beams. The SSB with the subcarrier spacing of 480 kHz or 960 kHz is used for measurement of narrow beams to improve throughput, for example, 64 narrow beams.

It can be seen that in implementations of the present disclosure, since the SSB may have the subcarrier spacing of 480 kHz or 960 kHz, the terminal can determine the value of the QCL parameter of the SSB based on the MIB and/or the SIB1. The value of the QCL parameter is used to help determine the SSB candidate position, which is conducive for the terminal to complete a beam sweeping process accurately and efficiently.

Refer to FIG. 3, FIG. 3 is a schematic flow chart of the method for determining a length of a discovery burst transmission window of an SSB provided in implementations of the disclosure. The method is applicable to the terminal 120 illustrated in FIG. 1A and includes the following.

At S301, the terminal obtains the length of the discovery burst transmission window of the SSB according to an SIB1.

In a specific implementation, after finishing an initial cell search or selection, the terminal obtains a configuration of an initial active BWP by an MIB and then obtains the SIB1 in the initial active BWP.

For example, the terminal obtains the length of the discovery burst transmission window through the MIB. In this way, the terminal has prior information about an SSB transmission window, which is beneficial to detecting the SSB on the initial active BWP and determining a PDCCH monitoring occasion through an association relationship between the SSB and the PDCCH.

In a possible implementation, the SSB has a subcarrier spacing of 120 kHz.

In this possible implementation, a value of the length of the discovery burst transmission window includes 1 millisecond (ms).

In this possible implementation, the value of the length of the discovery burst transmission window belongs to a first set. The first set is {1/8ms, 1/4ms, 1/2ms, 3/4ms, 1ms, 5/4ms}, or a subset of {1/8ms, 1/4ms, 1/2ms, 3/4ms, 1ms, 5/4ms} (in this way, the value of the first set can be relatively multiple and flexible).

In this possible implementation, the 1/8ms corresponds to 1 slot, the 1/4ms corresponds to 2 slots, the 1/2ms corresponds to 4 slots, the 3/4ms corresponds to 6 slots, 1ms corresponds to 8 slots, and the 5/4ms corresponds to 10 slots. These candidate slot values are selected to reduce the complexity of the terminal blindly detecting the SSB (for example, initial cell search) because these slot values correspond to durations far less than 5ms.

For example, the terminal obtains the length of the discovery burst transmission window through the MIB. In this way, the terminal has prior information about the SSB transmission window, which is beneficial to detecting/measuring the SSB on the initial active BWP and determining the PDCCH monitoring occasion through the association relationship between the SSB and the PDCCH.

In a possible implementation, the SSB has a subcarrier spacing of 240 kHz.

In this possible implementation, the value of the length of the discovery burst transmission window includes 1/2ms.

In this possible implementation, the value of the length of the discovery burst transmission window belongs to the second set. The second set is {1/16ms, 1/8ms, 1/4ms, 3/8ms, 1/2ms, 5/8ms}, or a subset of {1/16ms, 1/8ms, 1/4ms, 3/8ms, 1/2ms, 5/8ms} (in this way, the value of the second set can be relatively multiple and flexible).

In this possible implementation, the 1/16ms corresponds to 1 slot, the 1/8ms corresponds to 2 slots, the 1/4ms corresponds to 4 slots, the 3/8ms corresponds to 6 slots, the 1/2ms corresponds to 8 slots, and the 5/8ms corresponds to 10 slots. These candidate slot values are selected to reduce the complexity of the terminal blindly detecting the SSB (for example, initial cell search) because these slot values correspond to durations far less than 5ms.

For example, the terminal obtains the length of the discovery burst transmission window through the MIB or the SIB1. In this way, the terminal has prior information about the SSB transmission window, which is beneficial to detecting/measuring the SSB on the initial active BWP and determining the PDCCH monitoring occasion through the association relationship between the SSB and the PDCCH.

In a possible implementation, the SSB has a subcarrier spacing of 480 kHz.

In this possible implementation, the value of the length of the discovery burst transmission window includes 1ms

In this possible implementation, the value of the length of the discovery burst transmission window belongs to a third set. The third set is {1/8ms, 1/4ms, 1/2ms, 3/4ms, 1ms, 5/4ms}, or a subset of {1/8ms, 1/4ms, 1/2ms, 3/4ms, 1ms, 5/4ms} (in this way, the value of the third set can be relatively multiple and flexible).

In this possible implementation, the 1/8ms corresponds to 4 slots, the 1/4ms corresponds to 8 slots, the 1/2ms corresponds to 16 slots, the 3/4ms corresponds to 25 slots, the 1ms corresponds to 32 slots, and the 5/4ms corresponds to 40 slots. These candidate slot values are selected to align a window length corresponding to the SSB with the subcarrier spacing of 120 kHz.

For example, the terminal obtains the length of the discovery burst transmission window through the MIB or the SIB1. In this way, the terminal has prior information about the SSB transmission window, which is beneficial to detecting/measuring the SSB on the initial active BWP and determining the PDCCH monitoring occasion through the association relationship between the SSB and the PDCCH.

In a possible implementation, the SSB has a subcarrier spacing of 960 kHz.

In this possible implementation, the value of the length of the discovery burst transmission window includes 1/2ms

In this possible implementation, the value of the length of the discovery burst transmission window belongs to a fourth set. The fourth set is {1/16ms, 1/8ms, 1/4ms, 3/8ms, 1/2ms, 5/8ms}, or a subset of {1/8ms, 1/4ms, 1/2ms, 3/4ms, 1ms, 5/4ms} (in this way, the value of the fourth set can be relatively multiple and flexible).

In this possible implementation, the 1/16ms corresponds to 4 slots, the 1/8ms corresponds to 8 slots, the 1/4ms corresponds to 16 slots, the 3/8ms corresponds to 24 slots, the 1/2ms corresponds to 32 slots, and the 5/8ms corresponds to 40 slots. These candidate slot values are selected to align a window length corresponding to the SSB with the subcarrier spacing of 240 kHz.

For example, the terminal obtains the length of the discovery burst transmission window based on the MIB or the SIB1. In this way, the terminal has prior information about the SSB transmission window, which is beneficial to detecting/measuring the SSB on the initial active BWP and determining the PDCCH monitoring occasion through the association relationship between the SSB and the PDCCH.

It can be seen that, in implementations of the present disclosure, since the SSB may have the subcarrier spacing of 480 kHz or 960 kHz, the terminal can determine the length of the discovery burst transmission window based on the SIB1. The length of the discovery burst transmission window is used to help determine the transmission window of the SSB, which is conducive for the terminal to complete a beam sweeping process accurately and efficiently.

An apparatus for determining the QCL parameter of the SSB is provided in implementations of the present disclosure. The apparatus for determining the QCL parameter of the SSB may be the terminal. Specifically, the apparatus for determining the QCL parameter of the SSB is used to execute operations executed by the terminal in the foregoing method for determining the QCL parameter of the SSB. The apparatus for determining the QCL parameter of the SSB provided in implementations of the present disclosure may include modules corresponding to the corresponding operations.

According to implementations of the present disclosure, functional modules may be divided for the apparatus for determining the QCL parameter of the SSB in accordance with the foregoing method examples. For example, each functional module may be divided according to each function, and two or more functions may be integrated into one processing module. The above-mentioned integrated module can be implemented in the form of hardware or the form of a software program module. It should be noted that the division of modules in implementations of the present disclosure is schematic, and is merely a logical function division, and there may be other division manners in actual implementation.

In the case that each function module is divided according to each function, FIG. 4 shows a possible schematic structure diagram of the apparatus for determining the QCL parameter of the SSB involved in the foregoing implementations. As illustrated in FIG. 4, an apparatus 4 for determining the QCL parameter of the SSB is applicable to the terminal. The apparatus includes an obtaining unit 40.

The obtaining unit 40 is configured to obtain the value of the QCL parameter of the SSB based on the MIB and/or the SIB1.

In a possible implementation, the value of the QCL parameter of the SSB is up to 16.

In a possible implementation, the value of the QCL parameter belongs to the first set, and the first set is {16, 8, 4, 2}.

In a possible implementation, the SSB has the subcarrier spacing of 120 kHz or 240 kHz.

In a possible implementation, in terms of obtaining the value of the QCL parameter of the SSB based on the MIB and/or the SIB1, the obtaining unit 40 is specifically configured to obtain the value of the QCL parameter of the SSB based on the MIB.

In a possible implementation, the MIB includes QCL parameter indication information of the SSB. The QCL parameter indication information of the SSB is used to indicate the QCL parameter of the SSB with the subcarrier spacing of 120 kHz or 240 kHz, and the QCL indication information has 2 bits.

In a possible implementation, the value of the QCL parameter of the SSB is up to 64.

In a possible implementation, the value of the QCL parameter belongs to the second set, and the second set is {64, 32, 16, 8, 4, 2, 1}, or a subset of {64, 32, 16, 8, 4, 2, 1}.

In a possible implementation, the SSB has a subcarrier spacing of 480 kHz or 960 kHz.

In a possible implementation, in terms of obtaining the value of the QCL parameter of the SSB based on the MIB and/or the SIB1, the obtaining unit 40 is specifically configured to obtain the value of the QCL parameter of the SSB based on the SIB1.

In the case of an integrated unit, FIG. 5 shows a schematic structural diagram of another apparatus for determining the QCL parameter of the SSB provided in implementations of the disclosure. As illustrated in FIG. 5, apparatus 5 for determining the QCL parameter of the SSB includes a processing module 50 and a communicating module 51. The processing module 50 is configured to control and manage operations of the apparatus for determining the QCL parameter of the SSB, for example, operations executed by the obtaining unit 40, and/or other processes for performing the technology described in the disclosure. The communicating module 51 is configured to support communication between the apparatus for determining the QCL parameter of the SSB and other devices. As illustrated in FIG. 5, the apparatus for determining the QCL parameter of the SSB further includes a storage module 52 configured to store program codes and data of the apparatus for determining the QCL parameter of the SSB.

The processing module 50 may be a processor or a controller, for example, a central processing unit (CPU), a general-purpose processor, a digital signal processor (DSP), an application specific integrated circuit (ASIC), a field programmable gate array (FPGA), other programmable logic devices, transistor logic devices, hardware components, or any combination thereof. Various exemplary logical blocks, modules, and circuits described in conjunction with the disclosure may be achieved or implemented. The processor may also be a combination of realizing computing functions, for example, a combination of one or more microprocessors, a combination of the DSP and the microprocessor, or the like. The communicating module 51 may be a transceiver, a radio frequency (RF) circuit, a communication interface, or the like. The storage module 52 may be a memory.

All related content of each scenario involved in the foregoing method implementations of the present disclosure may be referred to as a functional description of a corresponding functional module, which is not described herein again. Both the apparatus 4 for determining the QCL parameter of the SSB and the apparatus 5 for determining the QCL parameter of the SSB can execute operations executed by the terminal in the foregoing method for determining the QCL parameter of the SSB illustrated in FIG. 2.

An apparatus for determining the length of the discovery burst transmission window of the SSB is provided in implementations of the present disclosure. The apparatus for determining the length of the discovery burst transmission window of the SSB may be terminal. Specifically, the apparatus for determining the length of the discovery burst transmission window of the SSB is used to execute operations executed by the terminal in the foregoing method for determining the length of the discovery burst transmission window of the SSB. The apparatus for determining the length of the discovery burst transmission window of the SSB provided in implementations of the present disclosure may include modules corresponding to the corresponding operations.

According to implementations of the present disclosure, functional modules may be divided for the apparatus for determining the length of the discovery burst transmission window of the SSB in accordance with the foregoing method examples. For example, each functional module may be divided according to each function, and two or more functions may be integrated into one processing module. The above-mentioned integrated module can be implemented in the form of hardware or the form of a software program module. It should be noted that the division of modules in implementations of the present disclosure is schematic, and is merely a logical function division, and there may be other division manners in actual implementation.

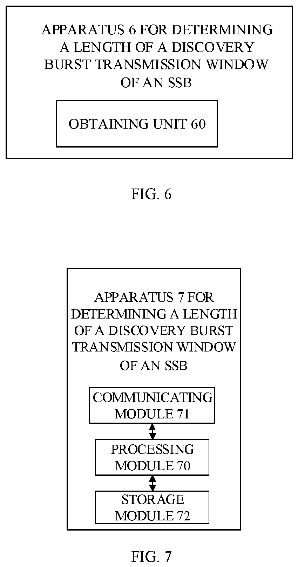

In the case that each function module is divided according to each function, FIG. 6 shows a possible schematic structure diagram of the apparatus for determining the length of the discovery burst transmission window of the SSB involved in the foregoing implementations. As illustrated in FIG. 6, an apparatus 6 for determining the length of the discovery burst transmission window of the SSB is applicable to a terminal. The apparatus includes an obtaining unit 60.

The obtaining unit 60 is configured to obtain the length of the discovery burst transmission window of the SSB based on an SIB1.

In a possible implementation, the SSB has a subcarrier spacing of 120 kHz.

In a possible implementation, the value of the length of the discovery burst transmission window includes 1ms.

In a possible implementation, the value of the length of the discovery burst transmission window belongs to the first set, and the first set is {1/8ms, 1/4ms, 1/2ms, 3/4ms, 1ms, 5/4ms}.

In a possible implementation, the 1/8ms corresponds to 1 slot, the 1/4ms corresponds to 2 slots, the 1/2ms corresponds to 4 slots, the 3/4ms corresponds to 6 slots, 1ms corresponds to 8 slots, and the 5/4ms corresponds to 10 slots.

In a possible implementation, the SSB has a subcarrier spacing of 240 kHz.

In a possible implementation, the value of the length of the discovery burst transmission window includes 1/2ms.

In a possible implementation, the value of the length of the discovery burst transmission window belongs to the second set, and the second set is {1/16ms, 1/8ms, 1/4ms, 3/8ms, 1/2ms, 5/8ms} .

In a possible implementation, the 1/16ms corresponds to 1 slot, the 1/8ms corresponds to 2 slots, the 1/4ms corresponds to 4 slots, the 3/8ms corresponds to 6 slots, the 1/2ms corresponds to 8 slots, and the 5/8ms corresponds to 10 slots.

In a possible implementation, the SSB has a subcarrier spacing of 480 kHz.

In a possible implementation, the value of the length of the discovery burst transmission window includes 1ms.

In a possible implementation, the value of the length of the discovery burst transmission window belongs to the third set, and the third set is {1/8ms, 1/4ms, 1/2ms, 3/4ms, 1ms, 5/4ms}.

In a possible implementation, the 1/8ms corresponds to 4 slots, the 1/4ms corresponds to 8 slots, the 1/2ms corresponds to 16 slots, the 3/4ms corresponds to 25 slots, the 1ms corresponds to 32 slots, and the 5/4ms corresponds to 40 slots.

In a possible implementation, the SSB has a subcarrier spacing of 960 kHz.

In a possible implementation, the value of the length of the discovery burst transmission window includes1/2ms.

In a possible implementation, the value of the length of the discovery burst transmission window belongs to a fourth set, and the fourth set is {1/16ms, 1/8ms, 1/4ms, 3/8ms, 1/2ms, 5/8ms}.

In a possible implementation, the 1/16ms corresponds to 4 slots, the 1/8ms corresponds to 8 slots, the 1/4ms corresponds to 16 slots, the 3/8ms corresponds to 24 slots, the 1/2ms corresponds to 32 slots, and the 5/8ms corresponds to 40 slots.

In the case of an integrated unit, FIG. 7 shows a schematic structural diagram of an apparatus for determining the length of the discovery burst transmission window of the SSB provided in other implementations of the disclosure. As illustrated in FIG. 7, an apparatus 7 for determining the length of the discovery burst transmission window of the SSB includes a processing module 70 and a communicating module 71. The processing module 70 is configured to control and manage operations of the apparatus for determining the length of the discovery burst transmission window of the SSB, for example, operations executed by the obtaining unit 60, and/or other processes for performing the technology described in the disclosure. The communicating module 71 is configured to support communication between the apparatus for determining the length of the discovery burst transmission window of the SSB and other devices. As illustrated in FIG. 7, the apparatus for determining the length of the discovery burst transmission window of the SSB further includes a storage module 72 configured to store program codes and data of the apparatus for determining the length of the discovery burst transmission window of the SSB.

The processing module 70 may be a processor or a controller, for example, a central CPU, a general-purpose processor, a DSP, an ASIC, an FPGA, other programmable logic devices, transistor logic devices, hardware components, or any combination thereof. Various exemplary logical blocks, modules, and circuits described in conjunction with the disclosure may be achieved or implemented. The processor may also be a combination of realizing computing functions, for example, a combination of one or more microprocessors, a combination of the DSP and the microprocessor, or the like. The communicating module 71 may be a transceiver, an RF circuit, a communication interface, or the like. The storage module 72 may be a memory.

All related content of each scenario involved in the foregoing method implementations of the present disclosure may be referred to as a functional description of a corresponding functional module, which is not described herein again. Both the apparatus 6 for determining the length of the discovery burst transmission window of the SSB and the apparatus 7 for determining the length of the discovery burst transmission window of the SSB can execute operations executed by the terminal in the foregoing method for determining the length of the discovery burst transmission window of the SSB illustrated in FIG. 3.

A chip is provided in implementations of the present disclosure. The chip is configured to obtain an MIB and/or an SIB1 and to obtain a value of a QCL parameter of an SSB based on the MIB and/or the SIB1.

A chip module is provided in implementations of the present disclosure. The chip module includes a transceiver component and a chip. The chip is configured to receive an MIB and/or an SIB1 through the transceiver component and to obtain a value of a QCL parameter of an SSB based on the MIB and/or the SIB1.

A chip is provided in implementations of the present disclosure. The chip is configured to obtain an SIB1, and to obtain a length of a discovery burst transmission window of an SSB based on the SIB1.

A chip module is provided in implementations of the present disclosure. The chip module includes a transceiver component and a chip. The chip is configured to receive an SIB1 through the transceiver component, and to obtain a length of a discovery burst transmission window of an SSB based on the SIB 1.

All or part of the above implementations can be implemented through software, hardware, firmware, or any other combination thereof. When implemented by software, all or part of the above implementations can be implemented in the form of a computer program product. The computer program product includes one or more computer instructions. When the computer instructions are used and executed by a computer, all or part of operations or functions of implementations of the disclosure are performed. The computer can be a general-purpose computer, a special-purpose computer, a computer network, or other programmable apparatuses. The computer instruction can be stored in a computer-readable storage medium, or transmitted from one computer-readable storage medium to another computer-readable storage medium. For example, computer instruction can be transmitted from one website, computer, server, or data center to another website, computer, server, or data center in a wired manner or wireless manner. The computer-readable storage medium can be any computer-accessible usable medium or a data storage device such as a server, a data center, or the like which is integrated with one or more usable media. The usable medium can be a magnetic medium (such as a soft disc, a hard disc, or a magnetic tape), an optical medium (such as a digital video disc (DVD)), or a semiconductor medium. The semiconductor medium may be a solid state disk (SSD).

A computer-storage medium is further provided in implementations of the disclosure. The computer-storage medium is used to store a computer program used for performing electronic data interchange (EDI), where the computer program enables a computer to execute some or all of operations of any of the methods illustrated in the above-mentioned method implementations. The computer includes electronic equipment.

A computer program product is further provided in implementations of the present disclosure. The computer program product includes a non-transitory computer-readable storage medium storing a computer program. The computer program is operable with a computer to execute some or all of operations of the methods illustrated in the above-mentioned method implementations. The computer program product may be a software installation package. The computer includes electronic equipment.

It should be understood that, in various implementations described herein, the magnitude of a sequence number of each process does not mean an order of execution, and the order of execution of each process should be determined by its function and internal logic and shall not constitute any limitation to an implementation process of implementations.

It will be appreciated that the methods, apparatuses, and systems disclosed in implementations herein may also be implemented in various other manners. For example, the above apparatus implementations are merely illustrative, the division of units is only a division of logical functions, and there may exist other manners of division in practice, multiple units or assemblies may be combined or may be integrated into another system, or some features may be ignored or skipped. In other respects, the coupling or direct coupling or communication connection as illustrated or discussed may be an indirect coupling or communication connection through some interface, device, or unit, and may be electrical, mechanical, or otherwise.

Separated units as illustrated may or may not be physically separated. Components or parts displayed as units may or may not be physical units, and may reside at one location or may be distributed to multiple networked units. Some or all of the units may be selectively adopted according to practical needs to achieve desired objectives of the disclosure.

Various functional units described in implementations herein may be integrated into one processing unit or may be present as several physically separated units, and two or more units may be integrated into one. The integrated unit may take the form of hardware or a combination of hardware and software functional units.

The integrated units, implemented as software functional units, may be stored in a computer-readable storage medium. The software functional units can be stored in a storage medium and may include multiple instructions that, when executed, can cause a computing device, for example, a personal computer, a server, a network equipment, and the like, to execute some operations of the methods described in various implementations. The above storage medium may include various kinds of media that can store program codes, such as a universal serial bus (USB) flash disk, a mobile hard drive, a read-only memory (ROM), a random access memory (RAM), a magnetic disk, or an optical disk.

Although the disclosure is disclosed as above, the present disclosure is not limited herein. Any person skilled in the art, within the spirit and scope of the disclosure, who can easily think of changes or replacements, can make various changes and modifications, including the combination of the different functions and implementation steps, including implementations of software and hardware, all of which belong to the scope of protection of the present disclosure.

## Claims

1. A method for determining a quasi co-location (QCL) parameter of a synchronization signal block (SSB), comprising:
obtaining a value of the QCL parameter of the SSB based on a master information block (MIB) and/or a system information block type-1 (SIB1).

2. The method of claim 1, wherein the value of the QCL parameter of the SSB is up to 16.

3. The method of claim 2, wherein the value of the QCL parameter belongs to a first set, and the first set is {16, 8, 4, 2}.

4. The method of claim 3, wherein the SSB has a subcarrier spacing of 120 kHz or 240 kHz.

5. The method of claim 4, wherein obtaining the value of the QCL parameter of the SSB based on the MIB and/or the SIB1 comprises:
obtaining the value of the QCL parameter of the SSB based on the MIB.

6. The method of claim 5, wherein the MIB comprises QCL parameter indication information of the SSB, the QCL parameter indication information of the SSB indicates the QCL parameter of the SSB with the subcarrier spacing of 120 kHz or 240 kHz, and the QCL indication information has 2 bits.

7. The method of claim 1, wherein the value of the QCL parameter of the SSB is up to 64.

8. The method of claim 7, wherein the value of the QCL parameter belongs to a second set, and the second set is {64, 32, 16, 8, 4, 2, 1}, or a subset of {64, 32, 16, 8, 4, 2, 1}.

9. The method of claim 8, wherein the SSB has a subcarrier spacing of 480 kHz or 960 kHz.

10. The method of claim 9, wherein obtaining the value of the QCL parameter of the SSB based on the MIB and/or the SIB1 comprises:
obtaining the value of the QCL parameter of the SSB based on the SIB1.

11. The method of claim 10, wherein the SIB1 comprises a QCL parameter indication information of the SSB, the QCL parameter indication information of the SSB indicates the QCL parameter of the SSB with the subcarrier spacing of 480 kHz or 960 kHz, and the QCL indication information has 2 bits or more than 2 bits.

12. A method for determining a length of a discovery burst transmission window of a synchronization signal block (SSB), comprising:
obtaining the length of the discovery burst transmission window of the SSB based on a system information block type-1 (SIB1).

13. The method of claim 12, wherein the SSB has a subcarrier spacing of 120 kHz.

14. The method of claim 13, wherein a value of the length of the discovery burst transmission window comprises 1 millisecond (ms).

15. The method of claim 14, wherein the value of the length of the discovery burst transmission window belongs to a first set, and the first set is {1/8ms, 1/4ms, 1/2ms, 3/4ms, 1ms, 5/4ms}.

16. The method of claim 15, wherein the 1/8ms corresponds to 1 slot, the 1/4ms corresponds to 2 slots, the 1/2ms corresponds to 4 slots, the 3/4ms corresponds to 6 slots, 1ms corresponds to 8 slots, and the 5/4ms corresponds to 10 slots.

17. The method of claim 12, wherein the SSB has a subcarrier spacing of 240 kHz.

18. The method of claim 17, wherein a value of the length of the discovery burst transmission window comprises 1/2ms.

19. The method of claim 18, wherein the value of the length of the discovery burst transmission window belongs to a second set, and the second set is {1/16ms, 1/8ms, 1/4ms, 3/8ms, 1/2ms, 5/8ms} .

20. The method of claim 19, wherein the 1/16ms corresponds to 1 slot, the 1/8ms corresponds to 2 slots, the 1/4ms corresponds to 4 slots, the 3/8ms corresponds to 6 slots, the 1/2ms corresponds to 8 slots, and the 5/8ms corresponds to 10 slots.

21. The method of claim 12, wherein the SSB has a subcarrier spacing of 480 kHz.

22. The method of claim 21, wherein a value of the length of the discovery burst transmission window comprises 1ms.

23. The method of claim 22, wherein the value of the length of the discovery burst transmission window belongs to a third set, and the third set is {1/8ms, 1/4ms, 1/2ms, 3/4ms, 1ms, 5/4ms}.

24. The method of claim 23, wherein the 1/8ms corresponds to four slots, the 1/4ms corresponds to 8 slots, the 1/2ms corresponds to 16 slots, the 3/4ms corresponds to 25 slots, the 1ms corresponds to 32 slots, and the 5/4ms corresponds to 40 slots.

25. The method of claim 12, wherein the SSB has a subcarrier spacing of 960 kHz.

26. The method of claim 25, wherein a value of the length of the discovery burst transmission window comprises 1/2ms.

27. The method of claim 26, wherein the value of the length of the discovery burst transmission window belongs to a fourth set, and the fourth set is {1/16ms, 1/8ms, 1/4ms, 3/8ms, 1/2ms, 5/8ms}.

28. The method of claim 27, wherein the 1/16ms corresponds to 4 slots, the 1/8ms corresponds to 8 slots, the 1/4ms corresponds to 16 slots, the 3/8ms corresponds to 24 slots, the 1/2ms corresponds to 32 slots, and the 5/8ms corresponds to 40 slots.

29. An apparatus for determining a quasi co-location (QCL) parameter of a synchronization signal block (SSB), comprising:
an obtaining unit configured to obtain a value of the QCL parameter of the SSB based on a master information block (MIB) and/or a system information block type-1 (SIB1).

30. The apparatus of claim 29, wherein the value of the QCL parameter of the SSB is up to 16.

31. The apparatus of claim 30, wherein the value of the QCL parameter belongs to a first set, and the first set is {16, 8, 4, 2}.

32. The apparatus of claim 31, wherein the SSB has a subcarrier spacing of 120 kHz or 240 kHz.

33. The apparatus of claim 32, wherein in terms of obtaining the value of the QCL parameter of the SSB based on the MIB and/or the SIB1, the obtaining unit is configured to:
obtaining the value of the QCL parameter of the SSB based on the MIB.

34. The apparatus of claim 33, wherein the MIB comprises a QCL parameter indication information of the SSB, the QCL parameter indication information of the SSB indicates the QCL parameter of the SSB with the subcarrier spacing of 120 kHz or 240 kHz, and the QCL indication information has 2 bits.

35. The apparatus of claim 29, wherein the value of the QCL parameter of the SSB is up to 64.

36. The apparatus of claim 35, wherein the value of the QCL parameter belongs to a second set, and the second set is {64, 32, 16, 8, 4, 2, 1}, or a subset of {64, 32, 16, 8, 4, 2, 1}.

37. The apparatus of claim 36, wherein the SSB has a subcarrier spacing of 480 kHz or 960 kHz.

38. The apparatus of claim 37, wherein in terms of obtaining the value of the QCL parameter of the SSB based on the MIB and/or the SIB1, the obtaining unit is configured to:
obtaining the value of the QCL parameter of the SSB based on the SIB1.

39. The apparatus of claim 38, wherein the SIB1 comprises a QCL parameter indication information of the SSB, the QCL parameter indication information of the SSB indicates the QCL parameter of the SSB with the subcarrier spacing of 480 kHz or 960 kHz, and the QCL indication information has 2 bits or more than 2 bits.

40. An apparatus for determining a length of a discovery burst transmission window of a synchronization signal block (SSB), comprising:
an obtaining unit configured to obtain the length of the discovery burst transmission window of the SSB based on a system information block type-1 (SIB1).

41. The apparatus of claim 40, wherein the SSB has a subcarrier spacing of 120 kHz.

42. The apparatus of claim 41, wherein a value of the length of the discovery burst transmission window comprises 1 millisecond (ms).

43. The apparatus of claim 42, wherein the value of the length of the discovery burst transmission window belongs to a first set, and the first set is {1/8ms, 1/4ms, 1/2ms, 3/4ms, 1ms, 5/4ms}.

44. The apparatus of claim 43, wherein the 1/8ms corresponds to 1 slot, the 1/4ms corresponds to 2 slots, the 1/2ms corresponds to 4 slots, the 3/4ms corresponds to 6 slots, 1ms corresponds to 8 slots, and the 5/4ms corresponds to 10 slots.

45. The apparatus of claim 40, wherein the SSB has a subcarrier spacing of 240 kHz.

46. The apparatus of claim 45, wherein a value of the length of the discovery burst transmission window comprises 1/2ms.

47. The apparatus of claim 46, wherein the value of the length of the discovery burst transmission window belongs to a second set, and the second set is {1/16ms, 1/8ms, 1/4ms, 3/8ms, 1/2ms, 5/8ms}.

48. The apparatus of claim 47, wherein the 1/16ms corresponds to 1 slot, the 1/8ms corresponds to 2 slots, the 1/4ms corresponds to 4 slots, the 3/8ms corresponds to 6 slots, the 1/2ms corresponds to 8 slots, and the 5/8ms corresponds to 10 slots.

49. The apparatus of claim 40, wherein the SSB has a subcarrier spacing of 480 kHz.

50. The apparatus of claim 49, wherein a value of the length of the discovery burst transmission window comprises 1ms.

51. The apparatus of claim 50, wherein the value of the length of the discovery burst transmission window belongs to a third set, and the third set is {1/8ms, 1/4ms, 1/2ms, 3/4ms, 1ms, 5/4ms }.

52. The apparatus of claim 51, wherein the 1/8ms corresponds to 4 slots, the 1/4ms corresponds to 8 slots, the 1/2ms corresponds to 16 slots, the 3/4ms corresponds to 25 slots, the 1ms corresponds to 32 slots, and the 5/4ms corresponds to 40 slots.

53. The apparatus of claim 50, wherein the SSB has a subcarrier spacing of 960 kHz.

54. The apparatus of claim 53, wherein a value of the length of the discovery burst transmission window comprises 1/2ms.

55. The apparatus of claim 54, wherein the value of the length of the discovery burst transmission window belongs to a fourth set, and the fourth set is {1/16ms, 1/8ms, 1/4ms, 3/8ms, 1/2ms, 5/8ms}.

56. The apparatus of claim 55, wherein the 1/16ms corresponds to 4 slots, the 1/8ms corresponds to 8 slots, the 1/4ms corresponds to 16 slots, the 3/8ms corresponds to 24 slots, the 1/2ms corresponds to 32 slots, and the 5/8ms corresponds to 40 slots.

57. A terminal, comprising a processor, a memory, and one or more programs stored in the memory and configured to be executed by the processor, the programs comprising instructions for executing operations of the method of any one of claims 1 to 11 or any one of claims 12 to 28.

58. A computer-readable storage medium configured to store a computer program used for performing electronic data interchange (EDI), wherein the computer program enables a computer to execute operations of the method of any one of claims 1 to 11 or any one of claims 12 to 28.

59. A chip, wherein,
the chip is configured to obtain the MIB and/or SIB1; and
the chip is further configured to obtain the value of the QCL parameter of the SSB based on the MIB and/or the SIB1.

60. A chip module, comprising a transceiver component and a chip, wherein,
the chip is configured to receive the MIB and/or the SIB1 through the transceiver component; and
the chip is further configured to obtain the value of the QCL parameter of the SSB based on the MIB and/or the SIB1.

61. A chip, wherein,
the chip is configured to obtain the SIB1; and
the chip is further configured to obtain the length of the discovery burst transmission window of the SSB based on the SIB1.

62. A chip module, comprising a transceiver component and a chip, wherein,
the chip is configured to receive the SIB 1 through the transceiver component; and
the chip is further configured to obtain the length of the discovery burst transmission window of the SSB based on the SIB1.
